# EUROPÄISCHE PATENTSCHRIFT

(11) **EP 2 439 488 B1**
(45) Veröffentlichungstag und Bekanntmachung des Hinweises auf die Patenterteilung: **30.05.2018**
(21) Anmeldenummer: 11183028.7
(22) Anmeldetag: 28.09.2011
(51) Int. Cl.: G01B 11/26, G01B 11/00

(54) **Optische Gewindestellungserfassungseinrichtung**
Optical device for thread position detection
Dispositif optique de détection de la position de filetage

(30) Priorität: 07.10.2010 DE 102010047618
(43) Veröffentlichungstag der Anmeldung: 11.04.2012
(73) Patentinhaber: Krones AG, 93073 Neutraubling (DE)
(72) Erfinder: Hüttner, Gerald, 93073 Neutraubling (DE); Piana, Stefan, 93073 Neutraubling (DE); Schmitt, Robert, 93073 Neutraubling (DE); Lappe, Ulrich, 93073 Neutraubling (DE); Fischer, Gerhard, 93073 Neutraubling (DE)
(74) Vertreter: Bittner, Bernhard

(56) Entgegenhaltungen:
- DE-A1- 19 540 545
- DE-C1- 19 914 028
- JP-A- 58 195 108
- JP-A- 61 288 109
- US-A- 4 758 084
- US-A- 5 126 556
- US-A- 5 900 945
- US-A1- 2006 045 324

## Beschreibung

Die vorliegende Erfindung bezieht sich auf eine Vorrichtung gemäß dem Oberbegriff des Patentanspruchs 1 und auf ein Verfahren gemäß dem Oberbegriff des Patentanspruches 9. Bei Behältern, bei denen das Mundstück (bzw. Gewindestellung) in einer bestimmten Position zur geblasenen Flaschenform stehen muss, gibt es zurzeit zahlreiche mechanische und optische Lösungen, die am Vorformling (Neck) bestimmte Markierungen, wie eine Nocke oder Kerbe, aufweisen. Speziell für Behälter, die im "preferential heating"-Prozess hergestellt werden, wird eine Ausrichtung des Vorformlings bzw. Preforms benötigt, damit zielgerichtet das gewünschte Temperaturprofil auf dem Vorformlingkörper mittels einer Wärmeeinrichtung, wie beispielsweise einer Infrarotstrahlungsquelle, einer Mikrowelle, eines Lasers, Kontaktwärme oder ähnliches, aufgebracht werden kann.
Bei der Gruppe der mechanischen Lösung wird mittels eines Keils oder ähnlichem in eine Kerbe (Nocken, des Preforms) eingetaucht und diese Kerbe bzw. der gesamte Preform dadurch fixiert. Der Preform ist dadurch orientiert, anschließend kann das gewünschte Profil auf den Preform temperiert werden und der Verschluss befindet sich bei richtig orientierten Vorformlingen nach dem Aufschrauben in einer gewünschten Stellung. Es ist somit bei dieser Lösung stets eine Markierung in Form einer Nocke, einer Kerbe oder ähnlichem am Vorformling erforderlich.

Bei der optischen Lösung wird die Kerbe mittels Kamera, Lichttaster oder Lasertaster ermittelt und durch einen Schrittmotor wird der Preform orientiert und anschließend kann das gewünschte Temperaturprofil auf den Preform aufgebracht werden.
Bei der mechanischen sowie bei der optischen Lösung ist in erster Linie ein zusätzlicher Aufwand beim Sortenwechsel bzw. Mundstückwechsel vorhanden. Es müssen Sensoren vorgesehen werden, die in Bezug auf das Mundstück des Vorformlings sehr genau eingestellt bzw. eingerichtet werden müssen. Dies führt zu einem wiederkehrend hohen Maß an Aufwand. Bei einem Kamerasystem, d. h. bei der zuvor genannten optischen Lösung, ist zwar mit einem geringeren Aufwand zu rechnen, da die Mundstücke und Markierungen im System bekannt sind, wenn das System einmal angewendet wurde, jedoch sind auch einem solchen System Grenzen gesetzt. So kann eine Kerbe im Tragring nur von unten und ein Nocken oberhalb vom Tragring nur von oben erkannt werden. Die Kamera müsste umgeschwenkt werden, oder man setzt zwei Stück, d. h. zwei Kameras ein, was mit zusätzlichem Kostenaufwand verbunden ist.
Zudem finden die Aufnahmen der Kamera auf einem Teilungsverzugsstern statt, wodurch zusätzliche Fehlerquellen aufgrund der Übergaben resultieren. Bei allen zuvor beschriebenen Varianten, d. h. mechanisch und optische Erfassung, sind auf dem Vorformling Markierungen in Form von mindestens einer Aussparung oder Erhebung ausgebildet, es handelt sich somit um Sonderpreforms, die deutlich teurer in der Herstellung bzw. Beschaffung sind als Standardpreforms. US 2006/045324 A1, US 5 900 945 A, DE 195 40 545 A1, US 4 758 084 A, JP 58 195108 A, JP 61 288109 A, DE 199 14 028 C1 und US 5 126 556 A offenbaren Vorrichtungen zur Inspektion von Hohlkörpern. Es ist somit Aufgabe der vorliegenden Erfindung eine einfache, sichere und deutlich günstigere Vorrichtung bzw. ein deutlich günstigeres Verfahren zu schaffen, mit der bzw. dem eine Gewindestellungserfassung in ausreichender Güte durchführbar ist.

Die zuvor genannte Aufgabe wird erfindungsgemäß durch eine Vorrichtung gemäß dem Patentanspruch 1 gelöst. Die hier vorgestellte Vorrichtung umfasst eine optische Gewindestellungserfassungseinrichtung (1) zum Erfassen der Drehstellung von Gewinden (2) von bewegten Behältnissen (3) bezüglich einer Längsachse der Behältnisse, sowie zumindest ein Behältnis (3), wobei die optische Gewindestellungserfassungseinrichtung (1) mindestens eine optische Detektiereinrichtung (4a,b), eine Prozessoreinrichtung und eine Positioniereinrichtung (6) zum definierten Ausrichten einer Längsachse (L) der Behältnisse (3) gegenüber der Detektiereinrichtung (4a,b) umfasst, wobei die Positioniereinrichtung (6) und ein definierter Kopplungsbereich (8a,b,c) des Behältnisses (3) dazu eingerichtet und dafür vorgesehen sind miteinander verbunden zu werden, wobei die optische Detektiereinrichtung (4a,b) dazu eingerichtet und dafür vorgesehen ist, berührungslos Positionswerte sowie Informationen zu mindestens einer relativen Drehstellung mindestens eines Gewindeabschnitts (2a) zu erfassen, und wobei die Prozessoreinrichtung dazu eingerichtet und dafür vorgesehen ist, unter Einbeziehung einer definierten Bezugsgröße und von zumindest zwei im Wesentlichen zueinander beabstandeten Positionswerten von ausgebildeten Gewindeabschnitten, sowie der Informationen, also Bildinformationen, Daten zur Drehstellung des Behältnisses zu erzeugen, und Informationen bezüglich der Position der Positionswerte zur Aufbereitung bzw. Ermittlung von Positionsdaten an die Prozessoreinrichtung zu übertragen und wobei die Daten aufbereitete, veränderte, ergänzte und/ oder in ein anderes Format überführte Bildinformationen sind, wobei die definierte Bezugsgröße einer unabhängig von der Drehstellung des Behältnisses (3) angeordneten Referenzstelle (10a,b,d) entspricht, die ein definiert ausgerichteter Behältnisabschnitt (10a,b) und/oder mindestens eine im Strahlengang der Detektiereinrichtung (4a,b) ausgebildete definierte Markierung (10d) im Bereich der Positioniereinrichtung (6) ist.

Vorteilhafte Weiterbildungen der Erfindung sind Gegenstand der abhängigen Ansprüche. Die Behältnisse sind besonders bevorzugt Flaschen, können jedoch ebenfalls Kanister, Dosen und Ähnliches sein. Das Basismaterial, aus denen die Behältnisse bzw. Vorformlinge bestehen, ist bevorzugt ein Kunststoff und besonders bevorzugt PET oder PLA. Die optische Gewindestellungserfassung erfolgt, um insbesondere von runden Behältnissen abweichende Behältnisse, wie beispielsweise sonstige sphärische und insbesondere ovale Behältnisse, herstellen zu können. Bei nicht runden Behältnissen ist zu beachten, dass die Deckelstellung gegenüber dem Behältniskörper einen optischen und/oder funktionellen Beitrag leisten kann. Werden beispielsweise an die Form des Behältnis angepasste Deckelformen verwendet, so ist erforderlich, dass die Formen sich ergänzen und somit die Fixier- bzw. Schließstellung des Deckels nach dem Eindrehen auf das Gewinde bzw. in das Gewinde des Behältnisses in einer Stellung angeordnet ist, die der optisch gewünschten Einheit entspricht.
Vorteile der vorliegenden Erfindung gegenüber der aus dem Stand der Technik bekannten Erfindung sind beispielsweise, dass die vorliegende Erfindung deutlich genauer, einfacher, billiger und sicherer arbeitet, da insbesondere keine mechanische Kontaktierung und keine Verwendung von Sondervorformlingen erforderlich ist. Des Weiteren bedeutet eine berührungslose Stellungsermittlung eine erhebliche Steigerung der erzielbaren Maschinenleistung.
In einer weiteren bevorzugten Ausführungsform der vorliegenden Erfindung ist die Referenzstelle ein definiert ausgerichteter Behältnisabschnitt, also ein Tragring, und/oder mindestens eine im Strahlengang der Detektiereinrichtung ausgebildete definierte Markierung im Bereich der Positioniereinrichtung. Die Referenzstelle der Erfindung kann einem Fixpunkt entsprechen und ist daher zumindest zum Zeitpunkt der Bild bzw. Bildinformationserfassung stets am selben Ort ausgebildet bzw. angeordnet.
Diese Ausführungsform ist vorteilhaft, da verschiedene Vergleichsabschnitte bzw. Referenzstellen vorsehbar sind, wodurch je nach Zweckmäßigkeit, d. h. je nach Anzahl, Ausgestaltung, Geschwindigkeit, Belastbarkeit, Temperaturbeständigkeit, etc. der Detektionseinrichtung bzw. des beobachteten Behältnisses Veränderungen bei der Auswahl der Vergleichsabschnitte bzw. Referenzstellen vornehmbar sind.
In einer weiteren bevorzugten Ausführungsform der vorliegenden Erfindung ist der definiert ausgerichtete Behältnisabschnitt der Tragring und/oder der Mündungsbereich, insbesondere die sich in einer Ebene erstreckenden Mündungskanten. Ferner ist denkbar, dass als Referenzstelle ein weiterer Ring des Vorformlings und/oder sonstige angeformte oder an dem Behältnis ausgebildete Erhebungen oder Vertiefungen, oder farbliche Markierungen bzw. nicht farbliche Markierung, wie z.B. Gravur/en, als Referenzstelle dienen, wobei die Erhebungen oder Vertiefungen besonders bevorzugt Bestandteile von Standardvorformlingen sind. Es sind somit auch möglich die Gewindestellung zu erfassen, wenn der Vorformling ungenau gegenüber der Positioniereinrichtung angeordnet ist, d.h. die Positionierung des Vorformlings gegenüber der Positioniereinrichtung kann mit großen Toleranzen erfolgen. Ferner ist denkbar, dass die Referenzstelle an einer vom Vorformling beabstandeten Einrichtung, insbesondere im Bereich der Positioniereinrichtung, angeordnet bzw. vorgesehen ist. Diese Ausführungsform ist vorteilhaft, da eine äußerst geringe Komponentenanzahl realisierbar ist, da bis auf die Detektiereinrichtung, die Positioniereinrichtung und den Vorformling bevorzugt auf weitere Einrichtungen verzichtet werden kann.
In einer weiteren bevorzugten Ausführungsform der vorliegenden Erfindung weist die Detektiereinrichtung eine Bildaufnahmeeinrichtung auf, wobei bevorzugt die Detektiereinrichtung eine Bildaufnahmeeinrichtung ist. Besonders bevorzugt ist die Bildaufnahmeeinrichtung eine Kamera, insbesondere eine Schwarz-weiß-, eine Farb- oder eine auf die Erfassung von bestimmten Farben festgelegte Kamera. Zur Erhöhung des Durchsatzes ist die Kamera besonders bevorzugt eine Highspeedkamera.

Diese Ausführungsform ist vorteilhaft, da durch die Detektiereinrichtung keine mechanische Belastung in das Behältnis induziert wird und somit eine hohe Durchsatzgeschwindigkeit realisierbar ist.

In einer weiteren bevorzugten Ausführungsform der vorliegenden Erfindung ist eine Prozessoreinrichtung zum Auswerten der von der Detektiereinrichtung erfassten Bildinformation insbesondere zur Ermittlung der Drehstellung des Behältnisses, vorgesehen, wobei auch denkbar ist, dass die Bildinformationen zu einer Prozessoreinrichtung einer weiteren Vorrichtung bzw. einer Hauptsteuereinrichtung zum Steuern von mehreren nacheinander angeordneten Vorrichtungen übermittelbar sind. Ebenfalls ist vorstellbar, dass eine Vielzahl an Prozessoreinrichtungen zum beschleunigten Auswerten, insbesondere gleichartige Prozessoreinrichtungen, vorgesehen sind.

Diese Ausführungsform ist vorteilhaft, da eine statistische Auswertung der Daten möglich ist und/oder eine Online-Überwachung der Gewindestellungserfassungseinrichtung möglich ist.

In einer weiteren bevorzugten Ausführungsform der vorliegenden Erfindung sind die erfassten Bildinformationen mit den in einem Speichermittel abgespeicherten Bildinformationen zu einer Vielzahl an relativen Stellungen des Gewindes vergleichbar.

Diese Ausführungsform ist vorteilhaft, da eine Produktionsumstellung äußerst einfach, sicher und schnell möglich ist, da bevorzugt lediglich Software-Änderungen vorgenommen werden müssen.

In einer weiteren bevorzugten Ausführungsform der vorliegenden Erfindung weist die Detektiereinrichtung eine Lasereinrichtung auf.

Diese Ausführungsform ist vorteilhaft, da eine präzise Aufbringung von Laserstrahlen auf die zu untersuchenden Bereiche des Vorformlings, insbesondere einen Gewindeabschnitt des Vorformlings, möglich ist.

Diese Ausführungsform ist vorteilhaft, da ein Laserstrahl äußerst präzise emittierbar sowie auswertbar und schnell ansteuerbar ist.

In einer weiteren bevorzugten Ausführungsform der vorliegenden Erfindung sind mit der Detektiereinrichtung Markierungen in oder am Behältnis erfassbar.
Diese Ausführungsform ist vorteilhaft, da beispielsweise farbliche bzw. eingravierte Markierungen oder durch Laser erzeugte Kennzeichnungen erfassbar sind, wodurch auch die Verwendung von an dem Behältnis ausgebildeten Referenzstellen, die in ihrer Lage veränderbar sind, zur Bestimmung der gewünschten Bildinformation verwendbar sind.
Gemäß einer weiteren bevorzugten Ausführungsform der vorliegenden Erfindung ist mindestens eine zweite und/oder eine dritte Detektiereinrichtung, insbesondere eine Lasereinrichtung, zum Bestimmen der Bezugsgröße vorgesehen.
Diese Ausführungsform ist vorteilhaft, da durch die weitere Detektiereinrichtung die Gewindestellung auch bei bewegten Behältnissen erfassbar ist.
Gemäß einer weiteren bevorzugten Ausführungsform ist eine Aktivierungseinrichtung, insbesondere ein Sensor, wie z.B. ein Taster oder ein optischer Sensor, insbesondere eine Lichtschranke, zum Auslösen der Detektiereinrichtung vorgesehen.
Diese Ausführungsform ist vorteilhaft, da durch die Aktivierungseinrichtung eine Aktivierung der Detektiereinrichtung im optimalen Moment durchführbar ist, wodurch unnötige Standzeiten vermeidbar sind und somit der Durchsatz pro Stunde erhöht werden kann.

Die vorliegende Erfindung ist ebenfalls auf ein Verfahren gemäß dem Patentanspruch 9 gerichtet. Bevorzugt werden neben einer Referenzstelle zwei Positionswerte von am Vorformling ausgebildete Gewindeabschnitte erfasst und die Informationen bezüglich deren Position zur Aufbereitung bzw. Ermittlung von Positionsdaten an die Prozessoreinrichtung weiter gegeben. Die Positionswerte repräsentieren bevorzugt 0-, 1-, 2-, oder 3- dimensionale Anteile der Gewindeabschnitte und sind besonders bevorzugt Teil/e von sich rechtwinklig zur Behälterlängsachse erstreckenden Ebenen, die zueinander beabstandet sind. Die Referenzstelle erstreckt sich ebenfalls bevorzugt in einer Ebene rechtwinklig zur Längsachse der Behältnisse und ist zu den Ebenen der Positionswerte beabstandet. Die Prozessoreinrichtung ermittelt bevorzugt aus dem Abstand einer Ebene zur Referenzstelle die Gewindestellung, wobei die Prozessoreinrichtung besonders bevorzugt beide Ebenen der Positionswerte bzw. die Abstände der Ebenen der Positionswerte zueinander und/oder zur Ebene der Referenzstelle zur Bestimmung der Daten bzw. der die Gewindestellung wiedergebenden Daten verwendet. Es ist zudem vorstellbar, dass weitere Positionswerte pro Behältnis erfasst werden bzw. weitere Eigenschaften der Behältnisse, insbesondere Durchmesser, Länge, Zusammensetzung und/oder Gewindetyp, durch die Detektiereinrichtung erfassbar sind oder der Prozessoreinrichtung vorgebbar oder vorgegeben sind.
Weitere Vorteile, Ziele und Eigenschaften vorliegender Erfindung werden anhand nachfolgender Beschreibung anliegender Zeichnungen erläutert, in welcher beispielhaft Gewindestellungserfassungseinrichtungen dargestellt sind. Bauteile der Gewindestellungserfassungseinrichtung, welche in den Figuren wenigsten im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.
Darin zeigt:
- Fig. 1: einen ersten schematischen Aufbau der optischen Gewindestellungserfassungseinrichtung gemäß der vorliegenden Erfindung;
- Fig. 2: einen zweiten schematischen Aufbau der optischen Gewindestellungserfassungseinrichtung gemäß der vorliegenden Erfindung;
- Fig. 3: einen dritten schematischen Aufbau der optischen Gewindestellungserfassungseinrichtung gemäß der vorliegenden Erfindung;
- Fig. 4: einen vierten schematischen Aufbau der optischen Gewindestellungserfassungseinrichtung gemäß der vorliegenden Erfindung; und
- Fig. 5: eine zweidimensionale Ansicht eines Mundstücks bzw. Gewindestücks eines Vorformlings.

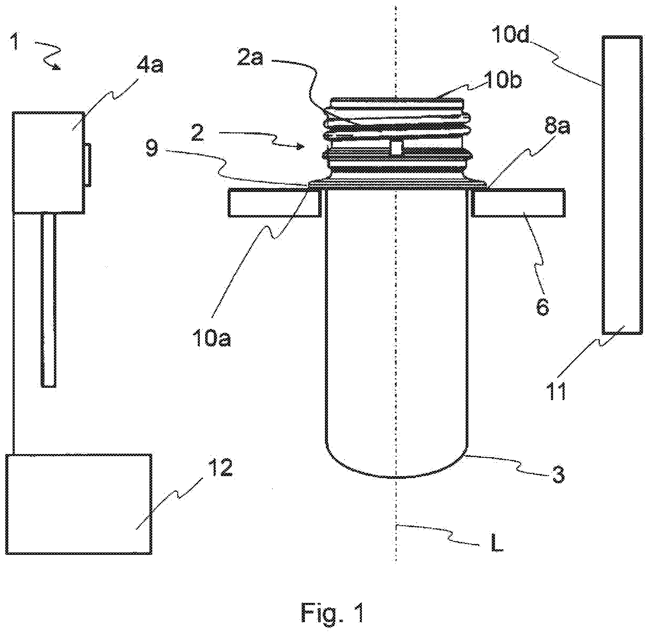

Der Fig. 1 lässt sich eine optische Gewindestellungserfassungseinrichtung 1 gemäß der vorliegenden Erfindung entnehmen. Diese optische Gewindestellungserfassungseinrichtung 1 weist eine Detektiereinrichtung 4a zum Aufnehmen von Bildern oder Videos auf. Die Detektiereinrichtung 4a ist besonders bevorzugt eine Kameraeinrichtung 4a, kann jedoch ebenfalls eine Beleuchtungseinrichtung zum direkten oder indirekten Beleuchten des Vorformlings 3, insbesondere des Mündungsbereichs des Vorformlings 3, aufweisen, wobei ebenfalls denkbar ist, dass eine Beleuchtungseinrichtung im Bereich der Detektiereinrichtung 4a vorgesehen ist, die besonders bevorzugt die Behältnismündung aus der im Wesentlichen gleichen Richtung beleuchtet, aus der die Bilderfassung erfolgt. Ferner könnte die Beleuchtungseinrichtung auch eine Blitzlichteinrichtung sein. Mit der Kameraeinrichtung 4a lassen sich Bilder vom Gewinde 2, insbesondere von Gewindeabschnitten 2a des Behältnisses 3 erfassen. Die Auswertung der erfassten Bilder erfolgt in einer Prozessoreinrichtung 12.
Die Bild bzw. Bildinformationserfassung erfolgt bevorzugt im Wesentlichen oder genau rechtwinklig zur Längsachse L der Behältnisse 3, wobei auch denkbar ist, dass die Bilderfassung in einem Winkel von 0°-90° gegenüber der Längsachse L der Behältnisse 3 erfolgt.
Das Behältnis 3 ist gemäß der in Fig. 1 gezeigten Darstellung mit einer Positioniereinrichtung 6, insbesondere einer Klammer 6, ausgerichtet bzw. positioniert. Das Behältnis 3 ist dabei in der in Fig. 1 gezeigten Darstellung über einen Kopplungsbereich 8a mit der Positioniereinrichtung 6 verbunden. Besonders bevorzugt liegt das Behältnis 3 in einer solchen Anordnung mit dem Tragring 9 auf der Positioniereinrichtung 6 auf.

Durch die Bezugszeichen 10a, 10b und 10d sind verschiedene mögliche Referenzstellen gekennzeichnet. Die Referenzstelle 10a repräsentiert beispielsweise den Tragring, die Referenzstelle 10b repräsentiert beispielsweise die Mündungskante des Behältnisses 3 und mit dem Bezugszeichen 10d ist bevorzugt eine Referenzstelle an einem Hintergrund 11 oder an einer sonstigen Wandungseinrichtung gekennzeichnet. Das mit dem Bezugszeichen 11 gekennzeichnete Element kann beispielsweise ein Hintergrund oder aber auch eine Beleuchtungseinrichtung, eine Spiegeleinrichtung, eine weitere Bilderfassungseinrichtung oder Ähnliches sein. Ferner ist denkbar, dass die Einrichtung 11 nicht vorgesehen ist. Die Referenzstellen 10a, 10b, 10d sind unabhängig von der Drehstellung der Behältnisse 3.

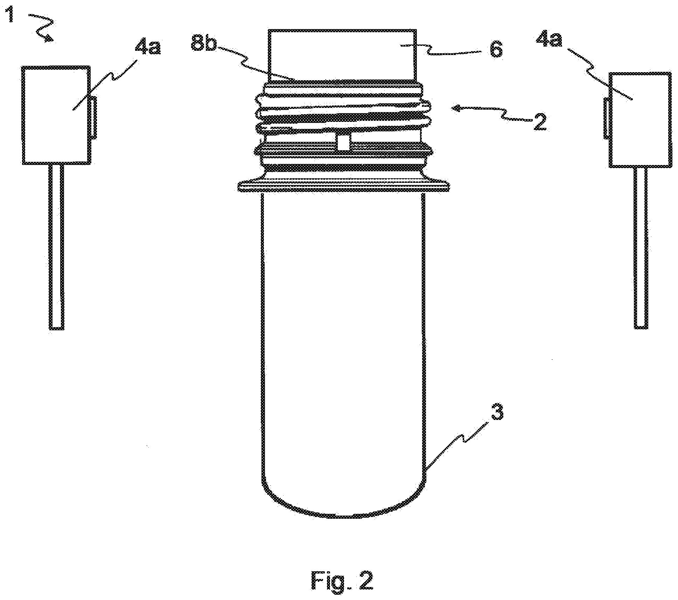

In Fig. 2 sind zwei optische Detektiereinrichtungen 4a dargestellt, die das Behältnis 3 aus zwei verschiedenen Richtungen erfassen. Ferner ist der Fig. 2 im Gegensatz zur Fig. 1 zu entnehmen, dass die Positioniereinrichtung 6 in das Behältnis 3 eingreift und somit das Behältnis 3 nicht mit dem Tragring 9 auf der Positioniereinrichtung 6 aufliegt, sondern durch eine Klemmung der Positioniereinrichtung 6 mit der Wandung des Behältnisses 3 eine Fixierung bzw. Positionierung erfolgt.

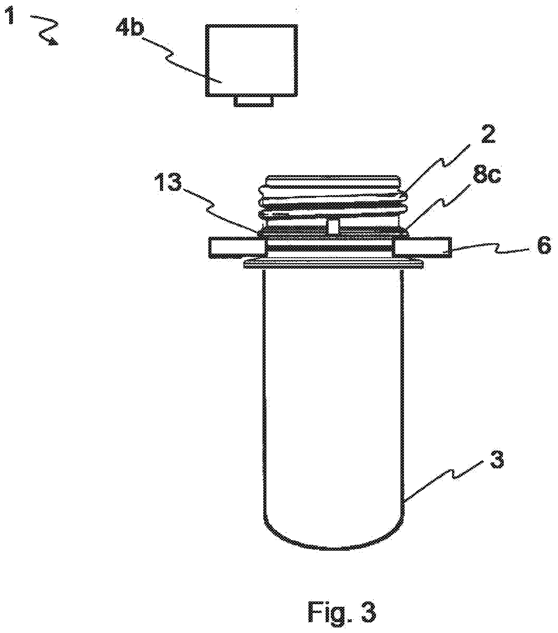

In Fig. 3 ist die Positioniereinrichtung 6 oberhalb des Tragrings und unterhalb eines weiteren Rings dargestellt. Es ist jedoch denkbar, dass die in den einzelnen Figuren gezeigten Positioniereinrichtungen 6 untereinander austauschbar sind. Der weitere Ring 13 und die Positioniereinrichtung 6 sind dabei beispielsweise über einen Kopplungsbereich 8c form- und/oder reibschlüssig koppelbar. Die optische Detektiereinrichtung 4b ist gegensätzlich zu den Ausführungsformen der Fig. 1, 2 und 4 in Längsrichtung über bzw. oberhalb des Gewindes 2 angeordnet. Es ist jedoch denkbar, dass die Detektiereinrichtung 4b auch in einem Winkel von bis zu 90°, insbesondere in der Darstellungsebene, gegenüber der Längsachse des Behältnisses geneigt anordenbar ist.

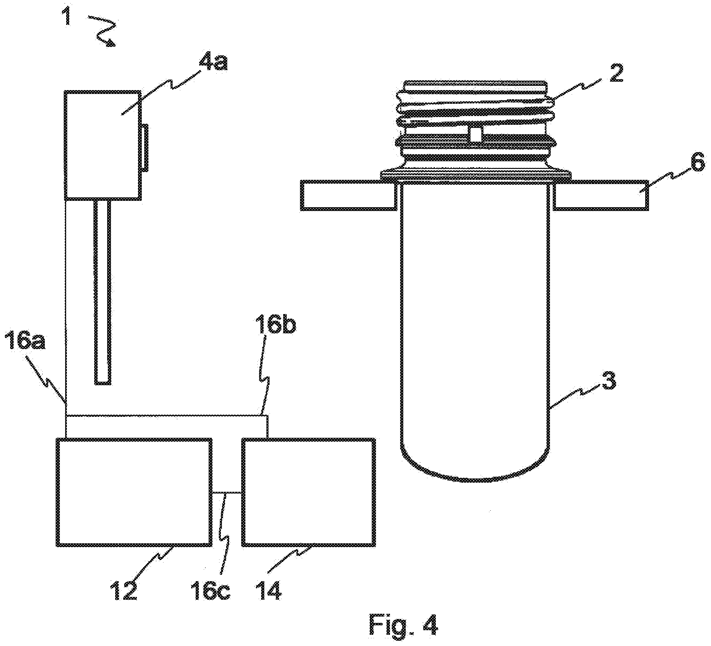

In Fig. 4 ist im Wesentlichen der gleiche Aufbau, wie in Fig. 1 dargestellt, wobei dieser Darstellung ebenfalls die mit dem Bezugszeichen 14 gekennzeichnete Speichereinrichtung zu entnehmen ist. Die Speichereinrichtung 14 dient dazu eine Vielzahl an Bildinformationen bereitzustellen, die mit den von der Detektiereinrichtung 4a erfassten Bildinformationen zum Erkennen der Ausrichtung bzw. Orientierung des Vorformlings 3 gemäß einer besonders bevorzugten Ausführungsform abgleichbar sind.

So kann beispielsweise mit 360 in der Speichereinrichtung 14 abgespeicherten Bildern bzw. Bildinformationen, die jeweils einer um 1° versetzten Aufnahme der Stellung eines Vorformlings 3 entsprechen eine bis auf ca. 1° genaue Erkennung der Ausrichtung bzw. Orientierung erfolgen, wobei die Bilder bzw. Bildinformationen zumindest Daten zum Mundstück bzw. jeweils ein Bild vom Mundstück und/oder Daten zur aktuellen Position bzw. Kamerastellung bei der Aufnahme umfassen. Wobei auch denkbar ist, dass die Genauigkeit durch Interpolation bzw. Zuordnung von gegenüber den vorgehaltenen bzw. gespeicherten Bildern bzw. Bildinformationen verschiedenen erfassten Bildern bzw. Bildinformationen auf 0,5° steigt. Es ist hierbei denkbar, dass beispielsweise genau 360 Bilder in der Speichereinrichtung 14 gespeichert sind oder dass ein Vielfaches an Bildern, insbesondere ein ganzzahliges Vielfaches, wie z.B. 720, 1080, 1420, etc. Bilder bzw. Bildinformationen, gespeichert sind.

Ferner ist vorstellbar, dass weniger Bilder bzw. Bildinformationen, wie z.B. 90, 180 oder 270 Bilder bzw. Bildinformationen, in der Speichereinrichtung 14 gespeichert sind. Dies entspricht somit dem Vergleichen von in einem Bilderpool gespeicherten Daten. D.h. die Gewindestellungserfassungseinrichtung, insbesondere die Prozessoreinrichtung 12 der Gewindestellungserfassungseinrichtung, vergleicht bevorzugt jede Aufnahme oder mehrere Aufnahmen mit den abgespeicherten Bildern im Pool und vergleicht jeweils das abgespeicherte Bild bzw. die abgespeicherten Bildinformationen und das aufgenommene Bild bzw. die aufgenommenen Bildinformationen. Das gespeicherte Bild bzw. die gespeicherten Bildinformationen mit der höchsten Übereinstimmung geben dabei die Position des Gewindes an bzw. werden repräsentativ von der Gewindestellungserfassungseinrichtung als Stellung des Gewindes für zumindest einen nachgelagerten Bearbeitungsschritt festgelegt.

Durch die Bezugszeichen 16a, 16b und 16c sind Datenverbindungen gekennzeichnet. Es ist hierbei vorstellbar, dass die Datenverbindungen 16a-16c als Kabel und/oder Funkverbindungen ausgeführt sind. Ferner ist denkbar, dass z.B. eine der Verbindungen 16b oder 16c nicht vorgesehen ist oder die Prozessoreinrichtung 12 und die Speichereinrichtung 14 als eine Prozessor-Speichereinrichtung ausgebildet ist.

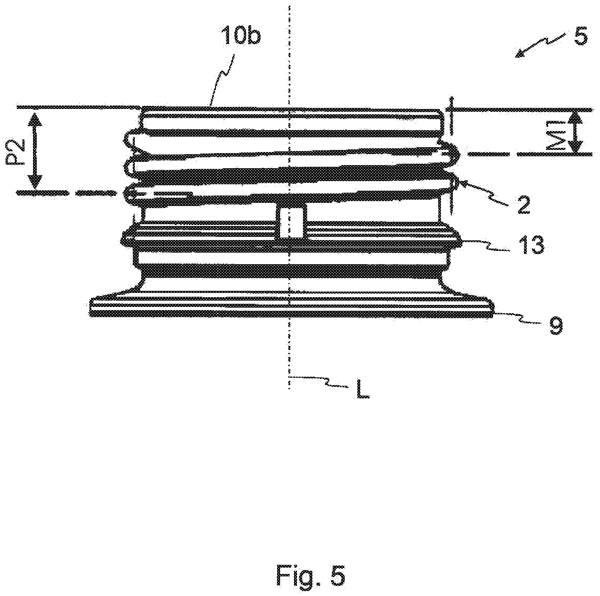

In Fig. 5 ist ein Mundstück 5 mit einem Gewinde 2 eines Behältnisses (nicht gezeigt) dargestellt. Durch die optische Gewindestellungserfassungseinrichtung gemäß der vorliegenden Erfindung wird mit der Detektiereinrichtung (nicht gezeigt) eine Aufnahme vom Mundstück 5 gemacht. Die Gewindestellungserfassungseinrichtung misst gemäß einer weiteren besonders bevorzugten Ausführungsform von einem Referenzpunkt (beispielsweise Oberkante Neck) die Schnittpunkte M1 und P2, anhand der Position der Referenzpunkte kann die Gewindeerfassungseinrichtung zurückrechnen, wie die Stellung des Gewindes bei der Aufnahme ist. So kann der Vorformling bzw. die Mündung 5 des Vorformlings in die richtige bzw. gewünschte Lage überführt werden. Bevorzugt sind Daten zur Gewindekontur, insbesondere der Ganghöhe, Teilung, Flankenform, des Nenndurchmessers, und/oder des Kerndurchmessers, der Gewindeerfassungseinrichtung, insbesondere der Prozessoreinrichtung 12 (nicht gezeigt), vorgebbar oder sind derartige Daten durch die Prozessoreinrichtung 12 von dem Bild bzw. den Bildinformationen ableitbar.

Es ist weiterhin denkbar, auch zweistufig, bestehende Nocken zu einer Vorausrichtung zu benutzen und die Gewindekontur zur Feinausrichtung zu verwenden.

Des Weiteren ist es möglich über mehrere Nocken/ Markierungen die etwa unterhalb des Gewindes auf verschiedenen Höhen angebracht sind auf die Drehlage des Vorformlings zu schließen. Dies wird notwendig, wenn etwa bei einem mehrteiligen Gewinde die Stellung nicht anhand der Gewindekontur zu einem Referenzpunkt ermittelt werden kann. Idealerweise sollten hier 4 um ca. 90° und bevorzugt genau 90° versetzte Markierungen angebracht sein, so dass mittels einer Kameraaufnahme die komplette Drehstellung festgestellt werden kann.

Denkbar wäre dieses Verfahren unter Verwendung von bevorzugt bereits vorhandenen Ventilationsschlitzen im Gewindegang.

Ferner ist vorstellbar, dass das Gewinde 2 zu der Mündungskante in Richtung L beabstandet ist und/oder in Richtung L zu dem Tragring 9 beabstandet ist.

Nocken, Kerben oder ähnliche Markierungspunkte sind daher gemäß der vorliegenden Erfindung überflüssig. Insbesondere kann auf Kerben am Tragring verzichtet werden, die z.B. beim Abdichten der Blasdüse Probleme bewirken.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Gewindestellungserfassungseinrichtung
- 2: Gewinde
- 2a: Gewindeabschnitte
- 3: Behältnis
- 4a, 4b: optische Detektiereinrichtung
- 5: Mundstück
- 6: Positioniereinrichtung, Klammer
- 8a, 8c: Kopplungsbereich
- 9: Tragring
- 10a, b, d: Referenzstellen
- 11: Element
- 12: Prozessoreinrichtung
- 13: weiterer Ring
- 14: Speichereinrichtung

## Patentansprüche

1. Vorrichtung umfassend eine optische Gewindestellungserfassungseinrichtung (1) zum Erfassen der Drehstellung von Gewinden (2) von bewegten Behältnissen (3) bezüglich einer Längsachse der Behältnisse, sowie umfassend zumindest ein Behältnis (3), wobei die optische Gewindestellungserfassungseinrichtung (1) mindestens eine optische Detektiereinrichtung (4a,b), eine Prozessoreinrichtung und eine Positioniereinrichtung (6) zum definierten Ausrichten einer Längsachse (L) der Behältnisse (3) gegenüber der Detektiereinrichtung (4a,b) umfasst, wobei die Positioniereinrichtung (6) und ein definierter Kopplungsbereich (8a,b,c) des Behältnisses (3) dazu eingerichtet und dafür vorgesehen sind miteinander verbunden zu werden,
**dadurch gekennzeichnet, dass**
die optische Detektiereinrichtung (4a,b) dazu eingerichtet und dafür vorgesehen ist, berührungslos Positionswerte sowie Informationen zu mindestens einer relativen Drehstellung mindestens eines Gewindeabschnitts (2a) zu erfassen, und wobei die Prozessoreinrichtung dazu eingerichtet und dafür vorgesehen ist, unter Einbeziehung einer definierten Bezugsgröße und von zumindest zwei im Wesentlichen zueinander beabstandeten Positionswerten von ausgebildeten Gewindeabschnitten, sowie der Informationen, also Bildinformationen, Daten zur Drehstellung des Behältnisses zu erzeugen, und Informationen bezüglich der Position der Positionswerte zur Aufbereitung bzw. Ermittlung von Positionsdaten an die Prozessoreinrichtung zu übertragen und wobei die Daten aufbereitete, veränderte, ergänzte und/oder in ein anderes Format überführte Bildinformationen sind, wobei die definierte Bezugsgröße einer unabhängig von der Drehstellung des Behältnisses (3) angeordneten Referenzstelle (10a,b,d) entspricht, die ein definiert ausgerichteter Behältnisabschnitt (10a,b) und/oder mindestens eine im Strahlengang der Detektiereinrichtung (4a,b) ausgebildete definierte Markierung (10d) im Bereich der Positioniereinrichtung (6) ist.

2. Gewindestellungserfassungseinrichtung (1) nach Anspruch 1,
**dadurch gekennzeichnet, dass**
der definiert ausgerichtete Behältnisabschnitt (10a,b) der Tragring (10a) und/oder der Mündungsbereich (10b), insbesondere die sich in einer Ebene erstreckende Mündungskante, ist.

3. Gewindestellungserfassungseinrichtung (1) nach einem der Ansprüche 1 oder 2,
**dadurch gekennzeichnet, dass**
die Detektiereinrichtung (4a,b) eine Bildaufnahmeeinrichtung (4a) zur Erfassung der Informationen aufweist.

4. Gewindestellungserfassungseinrichtung (1) nach Anspruch 3,
**dadurch gekennzeichnet, dass**
die erfassten Informationen Bildinformationen sind und mit in einem Speichermittel (14) vorgesehenen Bildinformationen, die eine Vielzahl an relativen Stellungen des Gewindes (2) wiedergeben, vergleichbar sind.

5. Gewindestellungserfassungseinrichtung nach einem der Ansprüche 1 oder 2,
**dadurch gekennzeichnet, dass**
die Detektiereinrichtung (4a,b) eine Lasereinrichtung (4b) aufweist.

6. Gewindestellungserfassungseinrichtung nach Anspruch 5,
**dadurch gekennzeichnet, dass**
durch die Lasereinrichtung (4b) ein Laserstrahl auf mindestens einen Gewindeabschnitt (2a) zum Ermitteln der Stellung des Behältnisses (3) emittierbar ist.

7. Gewindestellungserfassungseinrichtung nach einem der Ansprüche 5 oder 6,
**dadurch gekennzeichnet, dass**
mindestens eine zweite Lasereinrichtung zum Bestimmen der Bezugsgröße vorgesehen ist.

8. Gewindestellungserfassungseinrichtung nach einem der vorangegangenen Ansprüche,
**dadurch gekennzeichnet, dass**
eine Aktivierungseinrichtung zum Auslösen der Detektiereinrichtung (4a, 4b) vorgesehen ist.

9. Verfahren zur optischen Erfassung der Drehstellung von Gewinden (2) von bewegten Behältnissen (3), mindestens umfassend die Schritte: Definiertes Ausrichten einer Längsachse (L) der Behältnisse (3) gegenüber einer optischen Detektiereinrichtung (4a, b) mittels einer Positioniereinrichtung (6), wobei die Positioniereinrichtung (6) und ein definierter Kopplungsbereich (8a,b,c) des Behältnisses (3) miteinander verbunden werden,
**gekennzeichnet durch**
die berührungslose Erfassung von Positionswerten sowie Informationen zu der relevanten Drehstellung mindestens eines Gewindeabschnitts (2a) in Bezug zu mindestens einer definiert ausgerichteten und unabhängig von der Drehstellung des Behältnisses (3) angeordneten Referenzstelle (10a,b), wobei zumindest zwei im Wesentlichen zueinander beabstandete Positionswerte von ausgebildeten Gewindeabschnitten erfasst und deren Abstände zueinander und/oder zur Referenzstelle ermittelt werden, wobei die Referenzstelle (10a,b,d) ein definiert ausgerichteter Behältnisabschnitt (10a,b) und/oder mindestens eine im Strahlengang der Detektiereinrichtung (4a,b) ausgebildete definierte Markierung (10d) im Bereich der Positioniereinrichtung (6) ist, wobei durch eine Prozessoreinrichtung unter Einbeziehung einer definierten Bezugsgrüße und der zumindest zwei im Wesentlichen zueinander beabstandeten Positionswerte der ausgebildeten Gewindeabschnitte, sowie der Informationen, also Bildinformationen, Daten zur Drehstellung des Behälters erzeugt werden, wobei Informationen bezüglich der Position der Positionswerte zur Aufbereitung bzw. Ermittlung von Positionsdaten an die Prozessoreinrichtung übertragen werden und wobei die Daten aufbereitete, veränderte ergänzte und/oder in ein anderes Format überführte Bildinformationen sind.

## Claims

1. Optical thread position detection device (1) for detecting the rotational position of threads (2) of containers (3) in relation to a longitudinal axis of the container, and comprising at least a container (3), wherein the optical thread position detection device (1) comprising at least an optical detector (4a, 4b), a processor device and a positioning device (6) for the defined orientation of a longitudinal axis (L) of the containers (3) relative to the detector (4a,b), wherein the positioning device (6) and a defined coupling area (8a,b,c) of the container (3) are designed and intended to be connectable to one another,
**characterized in that**
the optical detector (4a,b) is designed and intended to detect position values and information on at least one relative rotational position of at least one thread portion (2a) without coming into contact, and wherein the processor device is designed an intended to generate data on the rotational position of the container, incorporating a defined reference variable and at least two substantially spaced apart position values of formed thread portions, wherein the information, i.e. image information, generates data for the rotational position of the container and to transmit information regarding the position of the position values for the preparation or determination of position data to the processor device and wherein the data are processed, modified, supplemented and/or converted image information, wherein the defined reference variable corresponds to a reference point (10a, b, d) arranged independently of the rotational position of the container (3) which is a defined oriented container portion (10a,b) and/or at least one defined marking (10d) formed in the beam path of the detector (4a, b) in the area of the positioning device (6).

2. Thread position detection device (1) according to claim 1,
**characterized in that**
the defined oriented container portion (10a,b) is the support ring (10a) and/or the neck area (10b), in particular the mouth edge extending in one plane.

3. Thread position detection device (1) according to claim 1 or 2,
**characterized in that**
the detector (4a,b) comprises an imaging device (4a) for registering the items of information.

4. Thread position detection device (1) according to claim 3,
**characterized in that**
the registered items of information are items of imaging information and can be compared with items of imaging information, which are provided in a storage device (14) and which represent a plurality of relative positions of the thread (2).

5. Thread position detection device according to one of claims 1 to 2,
**characterized in that**
the detector (4a,b) comprises a laser device (4b).

6. Thread position detection device according to claim 5,
**characterized in that**
the laser device (4b) serves to emit a laser beam towards at least one thread portion (2a) for determining the position of the container (3).

7. Thread position detection device according to claim 5 or 6,
**characterized in that**
at least a second laser device is provided for determining the reference variable.

8. Thread position detection device according to one of the preceding claims,
**characterized in that**
an activation device is provided for triggering the detector (4a, 4b).

9. Method for optically detecting the rotational position of threads (2) of moving containers (3), comprising at least the following steps:
Defined orientation of a longitudinal axis (L) of the containers (3) relative to a positioning device (6), wherein the positioning device (6) and a defined coupling area (8a,b,c) of the container (3) are connected to one another,
**characterized by**
the contactless detection of the relevant rotational position of at least one thread portion (2a) relative to at least one defined oriented reference point (10a,b), wherein at least two substantially spaced apart positon values of formed sections are detected and their distances from each other and/or from the reference point are determined, wherein the reference point (10 a, b, d) is a defined oriented container section (10 a, b) and/or at least one defined mark (10d) formed in the beam path of the detecting device (4 a, b) in the region of the positioning device (6), wherein data for the rotational position of the container are generated by a processor device taking into account a defined reference variable and the at least two substantially spaced apart position values of the formed threaded sections, as well as the information, i.e. image information, wherein information relating to the position of the position values is transmitted to the processor device for processing or determination of position data, and wherein the data are processed, modified, supplemented and/or converted image information.

## Revendications

1. Système comprenant un dispositif d'acquisition optique de position de filets (1), destiné à acquérir la position rotative de filets (2) de récipients (3) en mouvement par rapport à un axe longitudinal des récipients, et comprenant au moins un récipient (3), le dispositif d'acquisition optique de position de filets (1) comportant au moins un dispositif de détection optique (4a, b), un dispositif de traitement et un dispositif de positionnement (6) pour l'orientation définie d'un axe longitudinal (L) des récipients (3) par rapport au dispositif de détection (4a, b), le dispositif de positionnement (6) et une zone de couplage (8a, b, c) définie du récipient (3) étant conçus pour et destinés à être reliés l'un à l'autre,
**caractérisé en ce que**
le dispositif de détection optique (4a, b) est conçu pour et destiné à acquérir sans contact des valeurs de position ainsi que des informations concernant au moins une position rotative relative d'au moins une partie filetée (2a), et le dispositif de traitement étant conçu pour et destiné à produire des données concernant la position rotative du récipient, en tenant compte d'une grandeur de référence définie et d'au moins deux valeurs de position sensiblement espacées l'une de l'autre de parties filetées formées, ainsi que des informations, par conséquent des informations d'image, et à transmettre au dispositif de traitement les informations concernant la position des valeurs de position pour l'exploitation ou l'établissement de données de position, et les données étant des informations d'image exploitées, modifiées, complétées et/ou converties dans un autre format, la grandeur de référence définie correspondant à un point de référence (10a, b, d) situé indépendamment de la position rotative du récipient (3), lequel point est une partie de récipient (10a, b) orientée de manière définie et/ou au moins un marquage (10d) défini formé dans la trajectoire du dispositif de détection (4a, b) dans la zone du dispositif de positionnement (6).

2. Dispositif d'acquisition optique de position de filets (1) selon la revendication 1,
**caractérisé en ce que**
la partie de récipient (10a, b) orientée de manière définie est la bague de support (10a) et/ou la zone d'embouchure (10b), en particulier le bord d'embouchure s'étendant dans un plan.

3. Dispositif d'acquisition optique de position de filets (1) selon l'une quelconque des revendications 1 ou 2,
**caractérisé en ce que**
le dispositif de détection (4a, b) comprend un dispositif d'enregistrement d'images (4a) pour l'acquisition des informations.

4. Dispositif d'acquisition optique de position de filets (1) selon la revendication 3,
**caractérisé en ce que**
les informations acquises sont des informations d'image et peuvent être comparées à des informations d'image prévues dans un support de stockage (14), qui reproduisent une pluralité de positions relatives du filet (2).

5. Dispositif d'acquisition optique de position de filets selon l'une quelconque des revendications 1 ou 2,
**caractérisé en ce que**
le dispositif de détection (4a, b) comprend un dispositif à laser (4b).

6. Dispositif d'acquisition optique de position de filets selon la revendication 5,
**caractérisé en ce que**
le dispositif laser (4b) permet d'émettre un faisceau laser sur au moins une partie filetée (2a) pour identifier la position du récipient (3).

7. Dispositif d'acquisition optique de position de filets selon l'une quelconque des revendications 5 ou 6,
**caractérisé en ce que**
au moins un deuxième dispositif laser sert à déterminer la grandeur de référence.

8. Dispositif d'acquisition optique de position de filets selon l'une quelconque des revendications précédentes,
**caractérisé en ce que**
un dispositif d'activation sert à déclencher le dispositif de détection (4a, 4b).

9. Procédé d'acquisition optique de la position rotative de filets (2) de récipients (3) en mouvement, comprenant au moins les étapes :
d'orientation définie d'un axe longitudinal (L) des récipients (3) par rapport à un dispositif de détection optique (4a, b) au moyen d'un dispositif de positionnement (6), le dispositif de positionnement (6) et une zone de couplage (8a, b, c) définie du récipient (3) étant reliés l'un à l'autre,
**caractérisé par**
l'acquisition sans contact de valeurs de position ainsi que d'informations concernant au moins la position rotative pertinente d'au moins une partie filetée (2a) par rapport à au moins un point de référence (10a, b) orienté de manière définie et situé indépendamment de la position rotative du récipient (3), au moins deux valeurs de position sensiblement espacées l'une de l'autre de parties filetées formées étant acquises et leurs écarts l'une par rapport à l'autre et/ou par rapport au point de référence étant identifiés, le point de référence (10a, b, d) étant une partie de récipient (10a, b) orientée de manière définie et/ou au moins un marquage (10d) défini formé dans la trajectoire du dispositif de détection (4a, b) dans la zone du dispositif de positionnement (6), un dispositif de traitement permettant de produire des données concernant la position rotative du récipient, en tenant compte d'une grandeur de référence définie et de deux valeurs de position ou plus sensiblement espacées l'une de l'autre des parties filetées formées, ainsi que des informations, par conséquent des informations d'image, les informations concernant la position des valeurs de position pour l'exploitation ou l'établissement de données de position étant transmises au dispositif de traitement et les données étant des informations d'image exploitées, modifiées, complétées et/ou converties dans un autre format.
